# FASCICULE DE BREVET EUROPEEN

(11) **EP 3 044 013 B1**
(45) Date de publication et mention de la délivrance du brevet: **02.05.2018**
(21) Numéro de dépôt: 14759239.8
(22) Date de dépôt: 08.09.2014
(51) Int. Cl.: B60B 7/02, B60B 7/06, B60B 7/08

(54) **ENJOLIVEUR DE ROUE ADAPTABLE À DIFFÉRENTS VISSAGES DE JANTES**
AN VERSCHIEDENE FELGENSCHRAUBEN ANPASSBARE RADKAPPE
HUBCAP ADAPTABLE TO VARIOUS WHEEL RIM SCREWS

(30) Priorité: 09.09.2013 FR 1358617
(43) Date de publication de la demande: 20.07.2016
(73) Titulaire: Renault s.a.s, 92100 Boulogne-Billancourt (FR)
(72) Inventeur: MASI, Vincent, F-75020 Paris (FR); LAFORGE, Stephane, F-75014 Paris (FR); QUITTOT, Sylvie, F-78280 Guyancourt (FR)
(86) Numéro de dépôt international: PCT/EP2014/069109
(87) Numéro de publication internationale: WO 2015/032952

(56) Documents cités:
- WO-A1-2012/146855
- US-A- 4 707 035
- US-B1- 6 325 461

## Description

L'invention concerne un enjoliveur de roue de véhicule automobile.

L'invention concerne plus particulièrement un enjoliveur de roue de véhicule automobile comportant au moins un flasque destiné à couvrir au moins une jante de véhicule automobile d'un diamètre périphérique déterminé apte à recevoir au moins trois vis de fixation de la jante sur un moyeu répartis angulairement suivant un diamètre de répartition et suivant un pas angulaire déterminés, ledit flasque comportant une face dite interne qui comporte une périphérie à partir de laquelle s'étendent une pluralité de pattes élastiquement déformables destinées à coopérer par emboîtement et/ou coincement avec un bord de jante associé.

Dans une telle position, l'enjoliveur n'est toutefois pas immobilisé en rotation autour de l'axe de rotation de la roue, et une rotation intempestive de l'enjoliveur peut notamment perturber l'accès à la valve de gonflage. Dans ce domaine, il est connu, par le document WO 2012/146855 A1, qui correspond à l'art antérieur le plus proche, de réaliser des empreintes sur la face intérieure de l'enjoliveur, coopérant avec deux têtes de vis de fixation de la jante diamétralement opposées, afin de limiter la rotation de l'enjoliveur. Ces empreintes, en forme d'arcs de cercle, sont implantées selon un rayon spécifique correspondant au rayon d'implantation des vis. Deux empreintes sont alors nécessaires pour chaque vis afin de tenir compte des deux de rotation possibles de la roue.

Toutefois, pour un même diamètre périphérique de jante, le nombre de vis nécessaires à la tenue de la jante peut varier, dépendant essentiellement de la masse du véhicule et du couple moteur. Le nombre de vis est généralement compris entre trois et cinq. De ce fait, les enjoliveurs du type précité, associés à une jante prévue pour un nombre donné de vis ne sont pas compatibles avec des jantes prévues pour un assemblage avec un nombre différent de vis..

Par ailleurs, le diamètre de répartition des vis utilisé pour l'assemblage peut être légèrement différent selon qu'il est utilisé trois, quatre ou cinq vis.

Il est donc alors nécessaire de prévoir un type d'enjoliveur pour chaque type de jante, ce qui complique la fabrication de tels enjoliveurs, la gestion des stocks, et surtout augmente leur coût de revient car il est alors nécessaire d'utiliser des moules d'injection spécifiques pour chaque type d'enjoliveur.

L'invention remédie à ces inconvénients en proposant un enjoliveur apte à s'adapter à différents types de vissage de jantes de même diamètre périphérique.

Un autre but de l'invention concerne la simplification de l'immobilisation en rotation des enjoliveurs.

Dans ces buts, l'invention propose un enjoliveur du type décrit précédemment, caractérisé en ce que l'empreinte principale est complémentaire d'une tête d'une seconde vis de roue agencée suivant un second diamètre de répartition déterminé associé à un second type de jante du diamètre périphérique déterminé, pour permettre le montage et l'immobilisation en rotation de l'enjoliveur sur les premier et second types de jantes.

Selon d'autres caractéristiques de l'invention :
- l'empreinte principale comporte deux parois parallèles d'orientation parallèle à la direction radiale qui sont espacées d'une distance correspondant sensiblement au diamètre d'une tête d'une vis, qui s'étendent au moins suivant le premier diamètre de répartition et suivant le second diamètre de répartition pour permettre l'immobilisation en rotation de l'enjoliveur en formant butée angulaire sur la tête d'une première ou d'une seconde vis,
- l'empreinte principale présente la forme d'un "U" orienté radialement, dont la concavité est orientée vers l'extérieur de l'enjoliveur, et dont les branches parallèles comportent les parois parallèles et sont réunies par une paroi de jonction,

- une nervure joint la paroi de jonction à la face interne du flasque,
- l'enjoliveur comporte au moins une empreinte supplémentaire agencée selon un des premier ou second diamètres de répartition déterminés et selon le pas angulaire correspondant pour fournir une immobilisation supplémentaire de l'enjoliveur,
- l'empreinte supplémentaire est associée à un premier ou à un second type de jante apte à recevoir un nombre pair de vis de fixation et elle est agencée à l'opposé de l'empreinte principale pour équilibrer l'enjoliveur,
- l'empreinte supplémentaire est associée à un premier type de jante apte à recevoir quatre vis de fixation.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un enjoliveur selon l'invention vu du côté d'une face externe de son flasque ;
- la figure 2 est une vue en perspective d'un enjoliveur selon l'invention vu du côté d'une face interne de son flasque ;
- la figure 3 est une vue de détail en perspective de la partie centrale de la face interne du flasque ;
- la figure 4a est une vue de détail de face de la partie centrale de la face interne du flasque en position de réception de vis suivant un premier diamètre de répartition déterminé associé à un premier type de jante déterminé ;
- la figure 4b est une vue de détail de face de la partie centrale de la face interne du flasque de la figure 4a en position de réception de vis suivant un second diamètre de répartition déterminé associé à un second type de jante déterminé ;
- la figure 5 est une vue en perspective avec arrachement d'un enjoliveur selon l'invention.

Dans la description qui va suivre, des chiffres de référence identiques désignent des pièces identiques ou ayant des fonctions similaires.

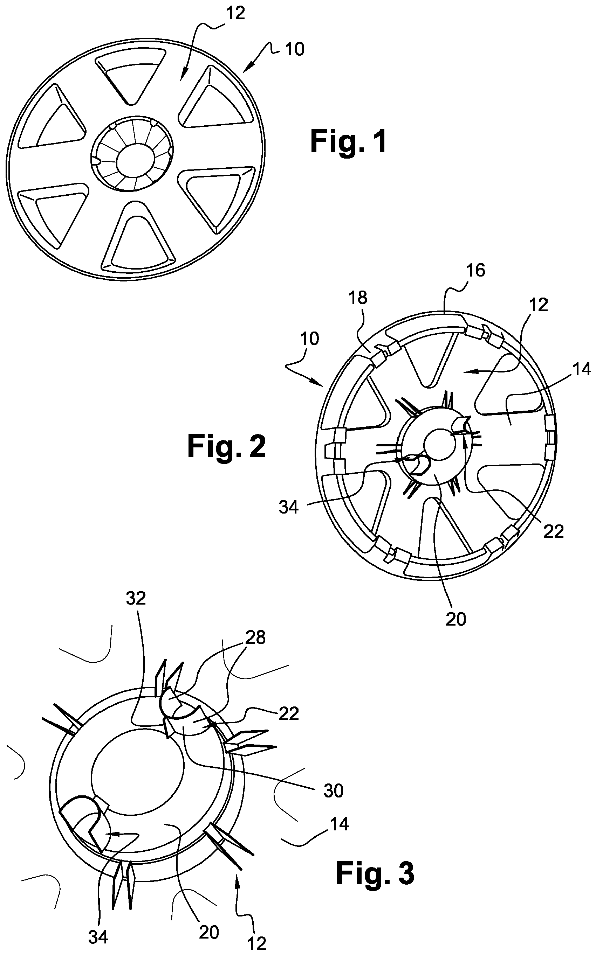

On a représenté aux figures 1 et 2 un enjoliveur de roue 10 de véhicule automobile.

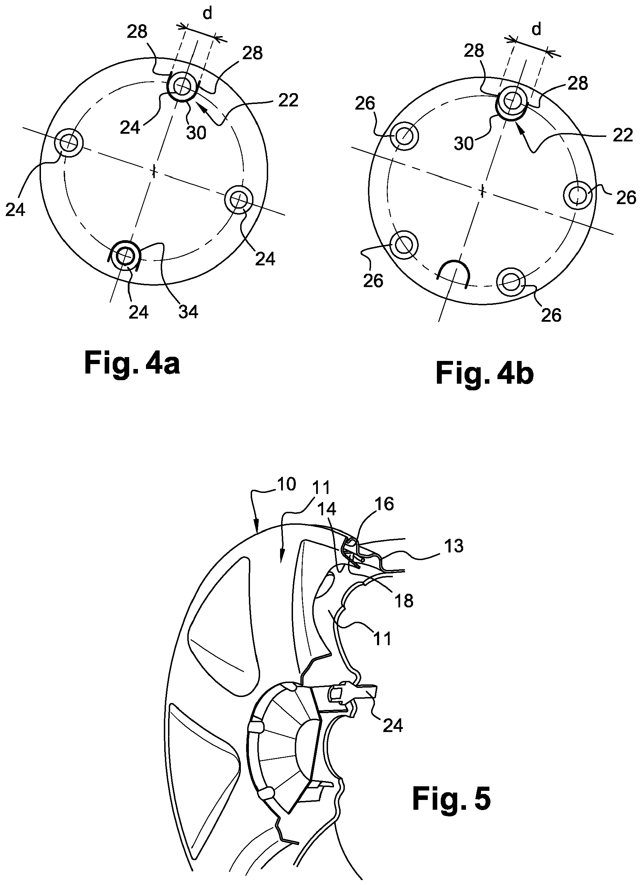

Comme l'illustre la figure 5, de manière connue, l'enjoliveur 10 comporte au moins un flasque 12 destiné à couvrir au moins une jante 11 de véhicule automobile, d'un diamètre périphérique déterminé apte à recevoir les têtes d'au moins trois vis 24 de fixation de la jante sur un moyeu qui sont réparties angulairement suivant un diamètre D₂₄ de répartition et un pas angulaire déterminés.

A cet effet, comme illustré aux figures 2 et 5, le flasque 12 comporte une face 14 dite interne qui comporte une périphérie 16 à partir de laquelle s'étendent une pluralité de pattes 18 élastiquement déformables destinées à coopérer par emboîtement et/ou coincement avec un bord 13 associé de la jante 11.

La face interne 14 du flasque 12 comporte aussi une partie centrale 20 représentée plus en détails à la figure 3. Cette partie centrale 20 comporte au moins une empreinte 22 dite principale qui, comme l'illustre la figure 4, est sensiblement complémentaire de la tête d'une première vis 24 de roue agencée suivant un premier diamètre de répartition déterminé associé à un premier type de jante du diamètre périphérique déterminé, pour immobiliser l'enjoliveur 10 en rotation.

L'invention propose un enjoliveur 10 du type décrit précédemment, caractérisé en ce que l'empreinte principale 22 est complémentaire de la tête d'une seconde vis 26 de roue agencée suivant un second diamètre D₂₆ de répartition déterminé associé à un second type de jante du diamètre périphérique déterminé, pour permettre le montage et l'immobilisation en rotation de l'enjoliveur 10 sur les premier et second types de jantes.

L'invention a ceci d'innovant qu'elle tire parti du constat que la fonction d'arrêt en rotation de l'enjoliveur assurée par l'empreinte principale peut aisément être assurée par une seule empreinte 22.

L'invention permet d'utiliser une unique empreinte 22 adaptable à différents diamètres D₂₄ et D₂₆ de répartition des vis, quel que soit le nombre de vis considéré, l'arrêt en rotation de l'enjoliveur 10 n'étant alors assuré que par une seule empreinte 22.

Selon l'invention, l'empreinte principale 22 comporte deux parois parallèles 28 d'orientation parallèles à la direction radiale espacées d'une distance "d" correspondant sensiblement au diamètre de la tête d'une des vis 24 ou 26 . Comme représenté à la figure 4a, ces parois 28 s'étendent au moins suivant le premier diamètre D₂₄ de répartition associé à l'implantation de quatre vis 24.

De plus, par la longueur des parois parallèles 28, l'empreinte peut coopérer avec une vis 26 implantée sur un diamètre différent, notamment le diamètre D₂₆ de répartition associé à l'implantation de cinq vis 26, comme représenté à la figure 4b, pour permettre l'immobilisation en rotation de l'enjoliveur 10 en formant une butée angulaire sur la tête d'une première ou seconde vis 24 ou 26.

De préférence, pour assurer la rigidité des parois 28, l'empreinte principale 22 présente la forme d'un U orienté radialement, de concavité orientée vers l'extérieur de l'enjoliveur 10, dont les branches parallèles comportent les parois parallèles 28.

Les deux parois 28 sont donc réunies par une paroi 30 de jonction. Cette configuration garantit la rigidité de l'empreinte 22.

Comme l'illustre la figure 3, on pourra remarquer qu'une nervure 32, joignant la paroi 30 de jonction à la face interne 14 du flasque 12 permet de rigidifier l'empreinte 22.

Dans le mode de réalisation préféré de l'invention, comme représenté à la figure 4a, 4b, l'enjoliveur 10 comporte au moins une empreinte 34 supplémentaire agencée selon un des premier ou second diamètre de répartition déterminés et selon le pas angulaire correspondant pour fournir une immobilisation supplémentaire de l'enjoliveur 10.

L'empreinte supplémentaire 34 peut prendre toute forme connue de l'état de la technique, dans la mesure où elle n'est dévolue qu'à un type de vis déterminé.

Ainsi, comme représenté à la figure 4, l'empreinte 34 peut être aussi une empreinte en forme de "U" orienté radialement ayant sa concavité tournée vers l'extérieur.

De préférence, comme l'illustre la figure 4, l'empreinte supplémentaire 34 est associée à un premier ou second type de jante apte à recevoir un nombre pair de vis 24 de fixation et elle est agencée à l'opposé de l'empreinte principale 22. Ainsi, l'empreinte 34 permet de surcroît d'équilibrer l'enjoliveur.

Ainsi, comme l'illustre la figure 4, l'empreinte supplémentaire 34 est par exemple associée à un premier type de jante apte à recevoir quatre vis 24 de fixation.

L'invention permet donc de rationaliser la fabrication et le stockage des enjoliveurs 10 de roue de véhicule automobile.

## Revendications

1. Enjoliveur (10) de roue de véhicule automobile comportant au moins un flasque (12) destiné à couvrir au moins une jante (11) de véhicule automobile d'un diamètre périphérique déterminé apte à recevoir au moins trois vis (24), de fixation de la jante (11) sur un moyeu, réparties angulairement suivant un diamètre de répartition et un selon un pas angulaire déterminés, ledit flasque comportant une face (14) dite interne qui comporte :
- une périphérie (16) à partir de laquelle s'étendent une pluralité de pattes (18) élastiquement déformables destinées à coopérer par emboîtement et/ou coincement avec un bord (13) de jante associé,
- une partie centrale (20) comportant au moins une empreinte (22) dite principale susceptible de coopérer avec une tête d'une première vis (24) de roue agencée suivant un premier diamètre (D₂₄) de répartition déterminé associé à un premier type de jante (11) du diamètre périphérique déterminé, pour immobiliser l'enjoliveur (10) en rotation.
**caractérisé en ce que** l'empreinte principale (22) est complémentaire d'une tête d'une seconde vis (26) de roue agencée suivant un second diamètre (D₂₆) de répartition déterminé associé à un second type de jante (11) du diamètre périphérique déterminé, pour permettre le montage et l'immobilisation en rotation de l'enjoliveur (10) sur le premier type de jante et sur le second type de jante.

2. Enjoliveur (10) de roue selon la revendication précédente, **caractérisé en ce que** l'empreinte principale (22) comporte deux parois (28) parallèles d'orientation parallèle à la direction radiale qui sont espacées d'une distance (d) correspondant sensiblement au diamètre d'une tête de vis (24, 26), qui s'étendent au moins suivant le premier diamètre (D₂₄) de répartition et suivant le second diamètre de répartition pour permettre l'immobilisation en rotation de l'enjoliveur (10) en formant butée angulaire sur la tête d'une première ou d'une seconde vis (24, 26).

3. Enjoliveur (10) de roue selon la revendication précédente, **caractérisé en ce que** l'empreinte principale (22) présente la forme d'un "U" orienté radialement, de concavité orientée vers l'extérieur de l'enjoliveur (10), dont les branches parallèles comportent les parois parallèles (28) et sont réunies par une paroi de jonction (30).

4. Enjoliveur (10) de roue selon la revendication précédente, **caractérisé en ce qu'**une nervure (32) joint la paroi (30) de jonction à la face interne (14) du flasque (12).

5. Enjoliveur (10) de roue selon l'une des revendications 3 ou 4, **caractérisé en ce qu'**il comporte au moins une empreinte supplémentaire (34) agencée selon un des premier ou second diamètre de répartition (D₂₄, D₂₆) déterminés et selon le pas angulaire correspondant pour fournir une immobilisation supplémentaire de l'enjoliveur (10).

6. Enjoliveur (10) de roue selon la revendication précédente, **caractérisé en ce que** l'empreinte (34) supplémentaire est associée à un premier type ou à un second type de jante (11) apte à recevoir un nombre pair de vis (24) de fixation, et est agencée à l'opposé de l'empreinte principale (22) pour équilibrer l'enjoliveur.

7. Enjoliveur (10) de roue selon la revendication précédente, **caractérisé en ce que** l'empreinte supplémentaire est associée à un premier type de jante (11) apte à recevoir quatre vis (24) de fixation.

## Patentansprüche

1. Kraftfahrzeugradkappe (10), umfassend mindestens einen Flansch (12), welcher dafür vorgesehen ist, mindestens eine Kraftfahrzeugfelge (11) mit einem bestimmten Umfangsdurchmesser zu bedecken, welche geeignet ist, mindestens drei Schrauben (24) zur Befestigung der Felge (11) an einer Nabe aufzunehmen, welche über den Umfang gemäß einem Verteilungsdurchmesser und einer bestimmten Winkelteilung verteilt sind, wobei der Flansch eine so genannte innere Seite (14) umfasst, welche umfasst:
- einen Umkreis (16), von welchem aus sich eine Vielzahl von elastisch verformbaren Klauen (18) erstrecken, welche dafür vorgesehen sind, durch Einfügung und/oder Klemmung mit einem zugeordneten Felgenrand (13) zusammenzuwirken,
- einen zentralen Abschnitt (20), welcher mindestens eine so genannte Hauptvertiefung (22) umfasst, welche geeignet ist, mit einem Kopf einer ersten Radschraube (24) zusammenzuwirken, welche gemäß einem ersten, bestimmten Verteilungsdurchmesser (D₂₄) angeordnet ist, welcher einer ersten Art von Felge (11) mit bestimmtem Umfangsdurchmesser zugeordnet ist, um die Radkappe (10) gegen Drehung zu blockieren,
**dadurch gekennzeichnet, dass** die Hauptvertiefung (22) komplementär zu einem Kopf einer zweiten Radschraube (26) ist, welche gemäß einem zweiten, bestimmten Verteilungsdurchmesser (D₂₆) angeordnet ist, welcher einer zweiten Art von Felge (11) mit bestimmtem Umfangsdurchmesser zugeordnet ist, um die Montage und Blockierung gegen Drehung der Radkappe (10) auf der ersten Art von Felge und auf der zweiten Art von Felge zu ermöglichen.

2. Radkappe (10) nach dem vorhergehenden Anspruch, **dadurch gekennzeichnet, dass** die Hauptvertiefung (22) zwei parallele Wände (28) mit zur radialen Richtung paralleler Ausrichtung umfasst, welche mit einem Abstand (d) beabstandet sind, welcher im Wesentlichen dem Durchmesser eines Schraubenkopfes (24, 26) entspricht, welche sich zumindest gemäß dem ersten Verteilungsdurchmesser (D₂₄) und gemäß dem zweiten Verteilungsdurchmesser erstrecken, um die Blockierung gegen Drehung der Radkappe (10) unter Bildung eines Winkelanschlags an dem Kopf einer ersten oder einer zweiten Schraube (24, 26) zu ermöglichen.

3. Radkappe (10) nach dem vorhergehenden Anspruch, **dadurch gekennzeichnet, dass** die Hauptvertiefung (22) die Form eines radial ausgerichteten "U" mit in Richtung auf den Außenbereich der Radkappe (10) ausgerichteter Konkavität aufweist, dessen parallele Schenkel die parallelen Wände (28) umfassen und durch eine Verbindungswand (30) verbunden sind.

4. Radkappe (10) nach dem vorhergehenden Anspruch, **dadurch gekennzeichnet, dass** sich eine Rippe (32) an die Verbindungswand (30) an der inneren Seite (14) des Flansches (12) anfügt.

5. Radkappe (10) nach einem der vorhergehenden Ansprüche 3 oder 4, **dadurch gekennzeichnet, dass** sie mindestens eine zusätzliche Vertiefung (34) umfasst, welche gemäß einem von dem ersten oder zweiten bestimmten Verteilungsdurchmesser (D₂₄, D₂₆) und gemäß der entsprechenden Winkelteilung angeordnet ist, um eine zusätzliche Blockierung der Radkappe (10) bereitzustellen.

6. Radkappe (10) nach dem vorhergehenden Anspruch, **dadurch gekennzeichnet, dass** die zusätzliche Vertiefung (34) einer ersten Art oder einer zweiten Art von Felge (11) zugeordnet ist, welche geeignet ist, eine gerade Anzahl von Befestigungsschrauben (24) aufzunehmen, und gegenüber von der Hauptvertiefung (22) angeordnet ist, um die Radkappe auszubalancieren.

7. Radkappe (10) nach dem vorhergehenden Anspruch, **dadurch gekennzeichnet, dass** die zusätzliche Vertiefung einer ersten Art von Felge (11) zugeordnet ist, welche geeignet ist, vier Befestigungsschrauben (24) aufzunehmen.

## Claims

1. Motor vehicle wheel hubcap (10) comprising at least one flange (12) intended to cover at least one motor vehicle wheel rim (11) of a predetermined peripheral diameter able to receive at least three screws (24) for fastening the wheel rim (11) to a hub, which screws are distributed angularly along a predetermined distribution diameter and with a predetermined angular pitch, the said flange comprising a face (14), termed inner face, which comprises:
- a periphery (16) from which there extend a plurality of elastically deformable lugs (18) intended to cooperate by interlocking and/or wedging with an associated wheel rim edge (13),
- a central part (20) comprising at least one recess (22), termed main recess, capable of cooperating with a head of a first wheel screw (24) arranged along a first predetermined distribution diameter (D₂₄) associated with a first type of wheel rim (11) of the predetermined peripheral diameter in order to rotationally immobilize the hubcap (10),
**characterized in that** the main recess (22) is complementary with a head of a second wheel screw (26) arranged along a second predetermined distribution diameter (D₂₆) associated with a second type of wheel rim (11) of the predetermined peripheral diameter in order to make it possible to mount and rotationally immobilize the hubcap (10) on the first type of wheel rim and on the second type of wheel rim.

2. Wheel hubcap (10) according to the preceding claim, **characterized in that** the main recess (22) comprises two parallel walls (28) oriented parallel to the radial direction which are spaced apart by a distance (d) corresponding substantially to the diameter of a head of a screw (24, 26), which walls extend at least along the first distribution diameter (D₂₄) and along the second distribution diameter in order to allow the rotational immobilization of the hubcap (10) by forming an angular stop on the head of a first or of a second screw (24, 26).

3. Wheel hubcap (10) according to the preceding claim, **characterized in that** the main recess (22) has the shape of a radially oriented "U" with a concavity oriented towards the outside of the hubcap (10), the parallel branches of the "U" comprising the parallel walls (28) and being joined by a junction wall (30).

4. Wheel hubcap (10) according to the preceding claim, **characterized in that** a rib (32) joins the junction wall (30) to the inner face (14) of the flange (12) .

5. Wheel hubcap (10) according to either of Claims 3 and 4, **characterized in that** it comprises at least one additional recess (34) arranged along one of the first or second predetermined distribution diameters (D₂₄, D₂₆) and with the corresponding angular pitch in order to provide additional immobilization of the hubcap (10).

6. Wheel hubcap (10) according to the preceding claim, **characterized in that** the additional recess (34) is associated with a first type or with a second type of wheel rim (11) able to receive an even number of fastening screws (24), and is arranged on the opposite side to the main recess (22) in order to balance the hubcap.

7. Wheel hubcap (10) according to the preceding claim, **characterized in that** the additional recess is associated with a first type of wheel rim (11) able to receive four fastening screws (24).
